# FASCICULE DE BREVET EUROPEEN

(11) **EP 3 872 529 B1**
(45) Date de publication et mention de la délivrance du brevet: **26.03.2025**
(21) Numéro de dépôt: 20160028.5
(22) Date de dépôt: 28.02.2020
(51) Int. Cl.: G01S 17/931, G01P 3/486, G01S 17/58, B60T 7/12

(54) **MESURES DE VITESSE**
GESCHWINDIGKEITSMESSUNGEN
SPEED MEASUREMENTS

(43) Date de publication de la demande: 01.09.2021
(73) Titulaire: STMicroelectronics (Grenoble 2) SAS, 38000 Grenoble (FR)
(72) Inventeur: PEROTTO, Thomas, 38000 Grenoble (FR)
(74) Mandataire: Cabinet Beaumont

(56) Documents cités:
- JP-A- 2002 264 785
- TW-U- M 574 122
- US-A- 5 220 266
- US-A1- 2002 189 336
- US-A1- 2016 363 665
- US-A1- 2017 160 392
- US-A1- 2017 222 738
- US-A1- 2020 070 787

## Description

### Domaine technique

La présente description concerne de façon générale des mesures de vitesse de déplacement, par exemple d'un véhicule, et de vitesse de rotation, par exemple d'une roue d'un véhicule.

### Technique antérieure

Des roues équipent divers véhicules dits véhicules monoplaces ou unipersonnels, aussi appelés engins de déplacement personnel ou unipersonnel. Un véhicule est dit monoplace lorsqu'il est conçu pour le déplacement d'une seule personne à la fois. Un véhicule monoplace peut être équipé d'un moteur électrique pour propulser le véhicule.

Des roues équipent aussi divers appareils d'entraînement sportif, tels que des vélos dits vélos d'appartement.

US 2002/0189336 concerne un système de surveillance à radar pour pneus et roues.

TW M 574 122 U concerne un dispositif d'aide au freinage pour un véhicule électrique à deux roues.

### Résumé de l'invention

Il existe un besoin de mesurer la vitesse d'un véhicule monoplace.

Il existe un besoin d'assurer la sécurité des personnes se déplaçant en utilisant un véhicule monoplace. En particulier, il existe un besoin de limiter le risque de collision.

Il existe un besoin de mesurer la vitesse de rotation d'un objet en rotation tel qu'une roue de véhicule, en particulier de véhicule monoplace, ou tel qu'une roue d'appareil d'entraînement sportif.

L'invention est définie par les revendications en annexe.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique, un exemple de véhicule monoplace du type auquel s'appliquent les modes de réalisation décrits ;
la figure 2 représente, par une vue en coupe et une vue de côté, une partie d'un exemple de mode de réalisation d'un véhicule monoplace, selon le premier aspect ;
la figure 3 représente, par des chronogrammes schématiques, un exemple de mise en œuvre d'un procédé de mesure de vitesse de rotation d'une roue du véhicule monoplace de la figure 2 ;
la figure 4 représente, de manière schématique et sous forme de blocs, un exemple d'un mode de réalisation d'un dispositif configuré pour mettre en œuvre le procédé de la figure 3 ;
la figure 5 représente, de manière schématique, un obstacle et un mode de réalisation d'un véhicule monoplace, selon le deuxième aspect non revendiqué;
la figure 6 représente, de manière schématique et sous forme de blocs, un exemple d'un mode de réalisation d'un dispositif anticollision du véhicule monoplace de la figure 5 non revendiqué; et
la figure 7 représente une allure, en fonction du temps, d'une distance entre le véhicule monoplace de la figure 5 et un obstacle, selon un second aspect non revendiqué.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les véhicules monoplaces ne sont pas décrits en détails, les modes de réalisation décrits étant compatibles avec les véhicules monoplaces usuels. En outre, des capteurs dits temps de vol ou ToF (en anglais "Time of Flight") ne sont pas décrits en détails, les modes de réalisation décrits étant compatibles avec les capteurs ToF usuels.

Sauf précision contraire, lorsque l'on fait référence à deux éléments connectés entre eux, cela signifie directement connectés sans éléments intermédiaires autres que des conducteurs électriques, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à un véhicule dans une position normale d'utilisation.

Sauf précision contraire, les expressions "environ", "approximativement", "sensiblement", et "de l'ordre de" signifient à 10 % près, de préférence à 5 % près, ou, concernant des orientations, à 10 degrés près, de préférence à 5 degrés près.

Sauf précision contraire, lorsque des éléments sont dits solidaires, cela signifie que ces éléments sont liés mécaniquement l'un à l'autre de manière rigide, par exemple fixés l'un à l'autre, ou qu'ils constituent des parties d'une même pièce. Autrement dit, ces éléments ne peuvent se déplacer ni tourner l'un par rapport à l'autre.

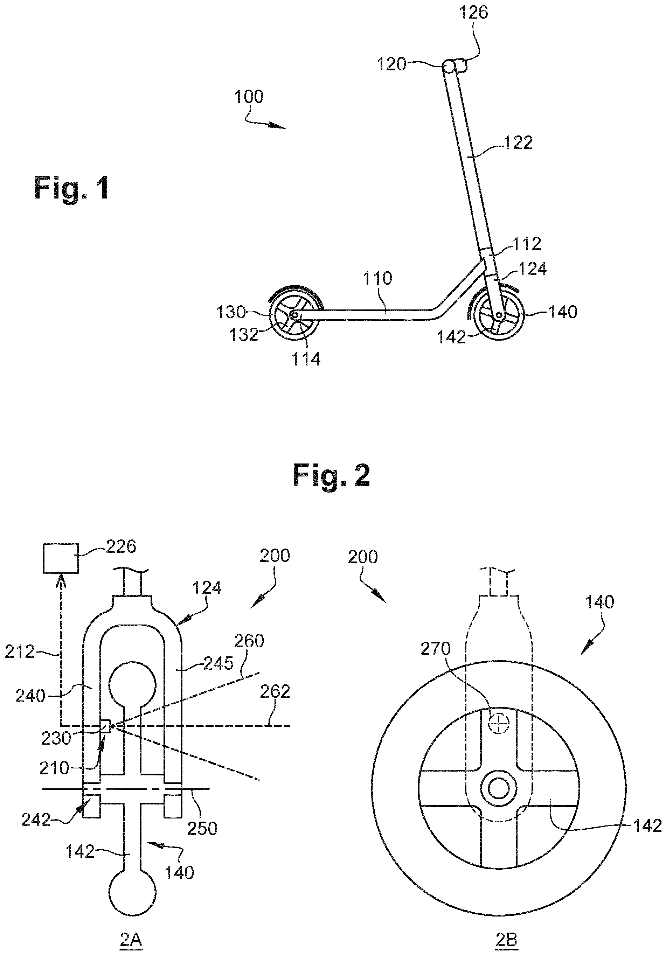

La figure 1 représente, de manière schématique, un exemple de véhicule monoplace d'un type auquel s'appliquent les modes de réalisation décrits.

Dans l'exemple représenté, le véhicule monoplace est une trottinette 100, définie par une planche 110 portée par deux ou trois roues et munie d'un guidon 120. La trottinette 100 a deux roues dans cet exemple, à savoir une roue arrière 130 et une roue avant 140. La roue arrière 130 et/ou la roue avant 140 peuvent comprendre des rayons, respectivement 132 et 142.

La trottinette 100 est, typiquement, équipée d'une motorisation électrique, et est alors appelée trottinette électrique.

Le guidon 120 se prolonge par une tige 122 en direction de la roue avant 140. La tige 122 passe dans un palier de rotation 112 solidaire de la planche 110, et s'étend jusqu'à une fourche 124 de maintien de la roue avant 140, c'est-à-dire une fourche avant. La fourche avant 124 et la tige 122 sont solidaires entre elles.

La planche 110 est en outre solidaire d'une fourche arrière 114 de maintien de la roue arrière 130.

Le guidon 120 peut comprendre un afficheur 126 adapté à afficher des informations à destination d'un utilisateur de la trottinette 100. L'afficheur 126 et les informations affichées ne sont pas décrits en détail, les modes de réalisation décrits étant compatibles avec les afficheurs usuels et les informations usuellement affichées.

Bien que l'exemple de véhicule monoplace représenté soit ici une trottinette, par exemple électrique, les applications des modes de réalisation décrits ci-après ne sont pas limitées à cet exemple particulier.

Ainsi, dans des exemples, le véhicule monoplace est de tout type comprenant un ou plusieurs supports prévus, comme la planche 110 de la trottinette 100, pour supporter au moins l'un des pieds de l'utilisateur. Le ou les supports sont portés par une ou plusieurs roues. Le véhicule monoplace peut alors comprendre un guidon, par exemple tel que le guidon 120, ou être dépourvu de guidon. Un tel véhicule monoplace peut être propulsé par un moteur. Cette propulsion par un moteur est préférée dans les cas où le véhicule monoplace comprend une seule roue ou deux roues disposées de part et d'autre d'une direction de déplacement. Dans ces cas, le véhicule monoplace comprend typiquement un dispositif de stabilisation gyroscopique et constitue ainsi, pour une roue unique, une gyroroue, et, pour deux roues, un gyropode.

Dans d'autres exemples, non représentés, le véhicule monoplace est de type bicyclette ou vélo, c'est-à-dire un véhicule à deux roues, de préférence dirigé par un guidon, l'une des roues étant entraînée par un pédalier. Le véhicule monoplace peut aussi être un tricycle, c'est-à-dire un véhicule à trois roues, de préférence dirigé par un guidon, l'une des roues étant entraînée par un pédalier. Le vélo peut être de type vélo à assistance électrique, dit aussi vélo électrique. Un vélo électrique est défini par un vélo ou un tricycle propulsé par un moteur électrique, le moteur étant, de préférence, activé en fonction de la rotation du pédalier.

Les exemples de véhicule monoplace décrits ci-dessus ne sont pas limitatifs, et les modes de réalisation décrits ci-après peuvent s'appliquer à tout véhicule monoplace, de préférence ayant un poids à vide inférieur à 50 kg, plus préférentiellement inférieur à 30 kg.

### Premier aspect qui est revendiqué

La figure 2 représente, par une vue 2A en coupe et une vue 2B de côté, une partie d'un exemple de mode de réalisation d'un véhicule monoplace 200, selon le premier aspect. Les vues 2A et 2B sont en correspondance.

Dans l'exemple représenté, le véhicule monoplace 200 comprend des éléments identiques ou similaires à ceux de la trottinette 100 de la figure 1. Ces éléments ne sont pas décrits à nouveau en détails. Seules les différences entre le véhicule monoplace 200 et la trottinette 100 sont mises ici en exergue.

La partie représentée comprend la roue avant 140 et la fourche avant 124. Cependant, les exemples de modes de réalisation, décrits ci-après dans leur application à la roue avant 140 et la fourche avant 124, s'appliquent aussi à la roue arrière 130 et la fourche arrière 114.

Le véhicule monoplace 200 est équipé d'un dispositif 210 de mesure de vitesse de rotation de la roue 140. Le dispositif 210 peut être relié, par une liaison 212, à une unité 226 du véhicule monoplace 200. La liaison 212 peut être filaire ou sans fil.

Dans un exemple, le dispositif 210 fournit une valeur mesurée de la vitesse de rotation de la roue 140 à l'unité 226. L'unité 226 peut alors être un afficheur du type de l'afficheur 126 de la trottinette 100 de la figure 1, à la différence que l'afficheur 226 reçoit la valeur mesurée, calcule la vitesse du véhicule monoplace 200 à partir de la valeur mesurée, et affiche la vitesse du véhicule monoplace 200. Le calcul de la vitesse du véhicule monoplace 200 à partir de la vitesse de rotation d'une roue n'est pas décrit ici en détail, les modes de réalisation décrits étant compatibles avec un tel calcul usuel. L'unité 226 peut aussi être, par exemple, constituée par un dispositif électronique de communication sans fil, tel qu'un téléphone portable ou une montre connectée, comprenant un programme dont l'exécution provoque la réception de la valeur mesurée, le calcul de la vitesse du véhicule monoplace 200 à partir de la valeur mesurée, et l'affichage de la vitesse du véhicule monoplace 200.

Dans un autre exemple, le dispositif 210 calcule la vitesse du véhicule monoplace 200 à partir de la vitesse de rotation de la roue 140. Le dispositif 210 fournit une valeur de vitesse du véhicule monoplace 200 à l'unité 226. L'unité 226 peut alors être un afficheur qui diffère de l'afficheur 126 de la trottinette 100 de la figure 1 en ce que l'afficheur 226 affiche la vitesse du véhicule monoplace 200 mesurée par le dispositif 210. L'unité 226 peut aussi être, par exemple, constituée par un dispositif électronique de communication sans fil, tel qu'un téléphone portable ou une montre connectée, comprenant un programme dont l'exécution provoque la réception de la valeur mesurée et l'affichage de la vitesse du véhicule monoplace 200 mesurée par le dispositif 210.

L'unité 226 peut également être reliée, par liaison filaire ou sans fil, de préférence connectée, à un moteur électrique et/ou à un système de freinage du véhicule monoplace 200. En complément ou en remplacement de l'affichage de la vitesse du véhicule monoplace 200, l'unité 226 peut prendre, à partir de la vitesse du véhicule monoplace 200, des mesures telles qu'une limitation de la vitesse du véhicule monoplace 200. Pour cela, l'unité 226 peut mettre en œuvre tout procédé usuel de limitation de vitesse d'un véhicule monoplace.

Le dispositif 210 comprend un capteur par temps de vol 230, ou capteur ToF.

Un tel capteur ToF comprend une source d'impulsions optiques et un récepteur optique. Lorsque les impulsions optiques émises par la source sont réfléchies par un élément d'un objet extérieur au capteur ToF, et que le récepteur reçoit une partie des impulsions réfléchies, le capteur ToF fournit, à partir du temps écoulé entre l'émission et la réception de chaque impulsion, une information concernant la présence de cet objet extérieur et/ou une information représentative d'une distance entre le capteur ToF et cet objet extérieur.

De préférence, les impulsions optiques du capteur ToF 230 ont des longueurs d'onde qui sont toutes, ou sensiblement toutes, situées dans le proche infrarouge, c'est-à-dire des longueurs d'onde comprises entre 700 nm et 1500 nm, de préférence comprises entre 800 nm et 1100 nm, plus préférentiellement comprises entre 850 nm et 940 nm, par exemple égales à 940 nm ou à environ 940 nm.

De préférence, les mesures par temps de vol, ou mesures ToF, effectuées par le capteur ToF 230 sont répétées régulièrement, chaque mesure ToF pouvant correspondre à plusieurs impulsions. La fréquence des mesures ToF est alors préférentiellement comprise entre 50 Hz et 5 kHz, par exemple égale à 100 Hz ou à environ 100 Hz, à 300 Hz ou à environ 300 Hz, ou encore, par exemple, à 600 Hz ou à environ 600 Hz. La fréquence des mesures ToF peut aussi être supérieure à 5 kHz.

Le capteur ToF 230 est, dans l'exemple représenté, solidaire d'une partie d'un bras 240 de la fourche avant 124. La fourche avant 124 peut comprendre un autre bras 245 situé, par rapport au bras 240, de l'autre côté de la roue 140, symétriquement par rapport à la roue 140. Plus précisément, les bras 240 et 245 sont disposés symétriquement par rapport à un plan médian de la roue 140 orthogonal à l'axe de la roue 140.

Le bras 240 constitue un élément fixe. Par élément fixe, on entend un élément servant de référence pour définir la rotation d'un objet en rotation tel que, dans l'exemple représenté, la roue 140. Pour un véhicule monoplace, cet élément est fixe par rapport au véhicule monoplace, c'est-à-dire que l'élément fixe est solidaire du véhicule monoplace. L'élément fixe accompagne donc le véhicule monoplace dans ses déplacements.

Dans l'exemple représenté, le bras 240 comporte un palier 242 de rotation de la roue 140. La roue 140 comporte un axe de rotation 250. L'axe de rotation 250 est en rotation dans le palier 242. Dans un autre exemple, non représenté, le bras 240 comporte un axe de rotation de la roue 140, et la roue 140 comporte un palier de rotation autour de l'axe de rotation de la roue 140. Dans cet autre exemple, l'axe de rotation de la roue 140 est donc fixe.

En fonctionnement, les impulsions optiques du capteur ToF 230 sont émises, typiquement, dans un cône d'émission 260 ayant un axe 262. Plus précisément, le cône d'émission 260 est délimité par une frontière définie, dans chaque plan orthogonal à l'axe 262, par les points où l'intensité des impulsions est, par unité de surface de ce plan, égale à un pourcentage donné d'une intensité maximale, en l'absence d'élément ou d'objet situé sur le chemin des impulsions. Ce pourcentage donné est de préférence inférieur ou égal à 10 %, par exemple égal à 5 %.

À partir des informations en provenance du capteur ToF 230, le dispositif 210 détecte les passages des rayons 142 en vis-à-vis du capteur ToF 230, c'est-à-dire les passages des rayons 142 dans le cône d'émission 260 à une distance suffisamment faible du capteur ToF 230 pour que le passage soit détectable. Pour cela, le capteur ToF 230 est orienté en sorte que les rayons 142 passent tour à tour dans le cône d'émission 260 lorsque la roue 140 tourne. Dans l'exemple représenté, le capteur ToF 230 est situé à l'intérieur de la fourche avant 124. L'axe 262 est, par exemple, horizontal, ou sensiblement horizontal, dans une position d'utilisation normale du véhicule monoplace 200.

Ainsi, le dispositif 210 détecte le passage des rayons 142 par une position 270. La position 270 est définie par l'intersection entre le cône d'émission 260 et le volume balayé par les rayons 142 lors de la rotation de la roue 140. Le capteur ToF 230 et la position 270 sont fixes l'un par rapport à l'autre, en particulier lors des mouvements du véhicule monoplace 200. Autrement dit, la position 270 est une position fixe par rapport au véhicule monoplace 200, et le détecteur est orienté vers la position 270.

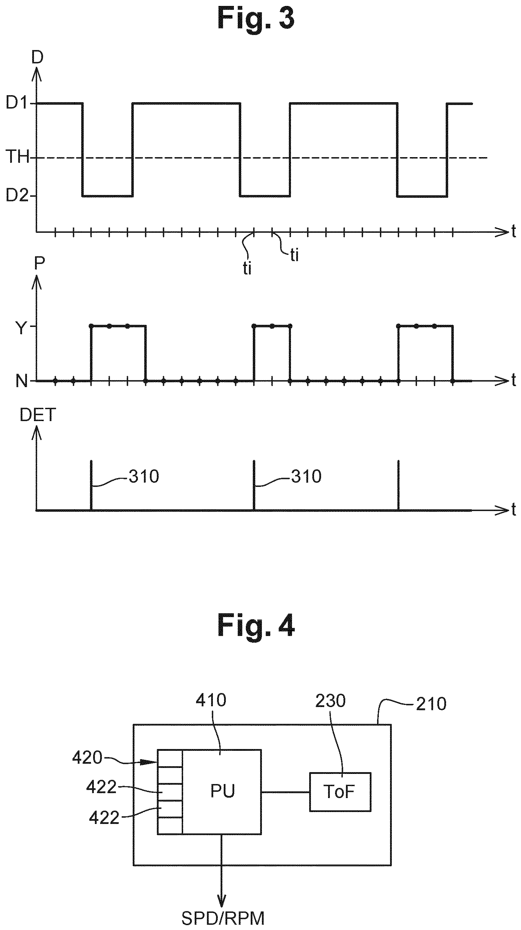

À partir des détections des passages des rayons 142 par la position 270, le dispositif 210 calcule une valeur représentative de la vitesse de rotation de la roue 140. Des modes de réalisation de ce calcul sont détaillés ci-après en relation avec les figures 3 et 4. La valeur représentative peut être une valeur analogique, ou, de préférence, numérique. La valeur représentative de la vitesse de rotation de la roue 140 est aussi une valeur représentative de la vitesse de déplacement du véhicule monoplace 200. En effet, la vitesse de rotation de la roue 140 et la vitesse de déplacement du véhicule monoplace 200 ont entre elles un rapport constant. Ce rapport est fonction du diamètre de la roue 140.

On aurait pu penser effectuer la mesure d'une vitesse de rotation de roue en positionnant un aimant et une bobine en sorte qu'une tension soit induite dans la bobine à chaque passage d'un rayon par une position donnée. Par rapport à une telle mesure de vitesse de rotation, le dispositif 210 évite de devoir ajouter un aimant fixé à l'un des rayons 142, et évite que des émissions électromagnétiques, typiquement liées au fonctionnement d'un moteur électrique, perturbent la mesure de vitesse de rotation.

De plus, la mesure de vitesse mise en œuvre par le dispositif 210 présente l'avantage d'être indépendante de la couleur ou de l'état de salissure des rayons 142 de la roue 140.

Selon un mode de réalisation, le cône d'émission 260 a un demi-angle au sommet élevé, c'est-à-dire supérieur à 10 degrés, plus préférentiellement supérieur à 20 degrés, par exemple égal à 27 degrés ou à environ 27 degrés.

De préférence, la source des impulsions du capteur ToF 230 est ponctuelle ou sensiblement ponctuelle à l'échelle des dimensions du véhicule monoplace 200. Plus préférentiellement, le cône d'émission 260 est alors de révolution autour de l'axe 262. L'angle au sommet du cône d'émission 260 est donc celui du cône de révolution. En variante, le cône d'émission 260 n'est pas de révolution, et l'angle au sommet est défini par l'angle maximum formé entre des génératrices du cône.

Dans des variantes où la source d'impulsions n'est pas ponctuelle, le cône d'émission 260 tel que défini ci-dessus peut s'éloigner de la forme d'un cône dans sa partie la plus proche de la source d'impulsions. L'angle au sommet du cône d'émission 260 est alors défini pour la partie du cône la plus éloignée du sommet.

Un avantage des valeurs élevées, définies ci-dessus, de l'angle au sommet du cône d'émission 260, par rapport à des variantes dans lesquelles le cône d'émission 260 a une valeur d'angle au sommet inférieure à ces valeurs élevées, est de réduire le risque qu'un des rayons 142 passe dans le cône d'émission 260 sans que ce passage soit détecté.

Selon un mode de réalisation, le capteur ToF 230 est compris dans, ou constitue, un boîtier de circuit intégré. Par boîtier de circuit intégré, on entend un boîtier, de préférence étanche, contenant un ou plusieurs circuits intégrés et comportant des plages de connexion et/ou des broches. Les plages de connexion et/ou les broches sont reliées électriquement aux circuits intégrés et sont destinées à être reliées électriquement, préférentiellement soudées, à une plaque de circuit imprimé PCB (en anglais "Printed Circuit Board"). À titre d'exemple, le capteur ToF 230 est de type commercialisé sous la référence "ST VL53L1X". À titre d'exemple, le boîter est suffisamment petit pour s'inscrire dans un parallélépipède ayant des dimensions de côtés égales à 5 mm, 3 mm et 2 mm, par exemple égales respectivement à 4,5 mm, 2,5 mm et 1,56 mm.

Un capteur ToF 230 inclus dans un boîtier de circuit intégré permet d'obtenir facilement les valeurs élevées, définies ci-dessus, d'angle au sommet du cône d'émission 260. En outre, par rapport à un dispositif de mesure de vitesse par aimant et bobine, le capteur ToF 230 présente l'avantage d'être compact. En particulier, le capteur ToF 230 est particulièrement facile à mettre en place. De plus, le capteur ToF 230 peut facilement être situé dans un logement situé dans le bras 240 de la fourche avant 124. Le fait de prévoir que le capteur ToF 230 soit situé dans un tel logement permet de protéger facilement le capteur ToF 230.

La figure 3 représente, par des chronogrammes schématiques, un exemple de mise en œuvre d'un procédé de mesure de vitesse de rotation par le dispositif 210 décrit ci-dessus en relation avec la figure 2. Plus précisément, on a représenté, en fonction du temps t :
- une distance D entre le capteur ToF 230 et un élément situé en vis-à-vis du capteur ToF 230 ;
- un valeur binaire P représentative de l'absence (N)/de la présence (Y) d'un rayon 142 en vis-à-vis du capteur ToF 230 ; et
- des instants de détection (DET) d'un passage d'un rayon 142 de la roue 140 en vis-à-vis du capteur ToF 230.

À titre d'exemple, le capteur ToF 230 est configuré pour fournir, à chaque impulsion du capteur ToF 230, un signal représentatif :
- lorsqu'aucun élément n'est situé en vis-à-vis du capteur ToF 230, de l'absence d'élément en vis-à-vis du capteur ToF 230 ;
- lorsque qu'un élément est seul situé en vis-à-vis du capteur, de la distance entre le capteur ToF 230 et cet élément ; et
- lorsque plusieurs éléments sont situés en vis-à-vis du capteur ToF 230, de la distance entre le capteur ToF 230 et l'élément le plus proche situé en vis-à-vis du capteur ToF 230.

Dans l'exemple représenté, la distance D prend une valeur D1 lorsqu'aucun rayon n'est situé en vis-à-vis du capteur. La valeur D1 peut correspondre à la distance entre le capteur ToF 230 et le bras 245 (figure 2). Lorsqu'un rayon 142 passe en vis-à-vis du capteur ToF 230, la distance D prend une valeur D2 inférieure à la valeur D1. Le rayon 142 est alors l'élément le plus proche situé en vis-à-vis du capteur.

A des instants ti, de préférence répétés régulièrement, le capteur ToF 230 émet les impulsions optiques et fournit un signal représentatif de la distance D mesurée par le capteur. Ce signal prend des valeurs mesurées représentatives des valeurs D1 et D2. Dans des variantes, par exemple lorsque le bras 245 (figure 2) n'est pas situé dans le cône d'émission 260, la valeur représentative de la valeur D2 peut être remplacée par toute valeur représentative d'une absence de rayon 142 en vis-à-vis du capteur ToF 230.

Le dispositif 210 compare le signal fourni par le capteur ToF 230 à une valeur représentative d'un seuil de distance TH. Le dispositif 210 distingue ainsi entre la présence et l'absence d'élément situé en vis-à-vis du capteur à une distance inférieure à la distance TH. Dans le cas d'impulsions régulières, la présence et l'absence sont ainsi distinguées à des instants répétés régulièrement. À titre d'exemple, le seuil de distance TH est compris entre 0,5 cm et 7 cm, par exemple égal à environ 7 cm, de préférence compris entre 0,5 cm et 3 cm, par exemple égal à environ 3 cm.

Le signal P résulte de la comparaison entre la distance mesurée par temps de vol et le seuil TH. Le signal P prend un niveau N lorsqu'une impulsion optique se produit en l'absence de rayon 142 en vis-à-vis du capteur ToF 230, et une prend un niveau Y lorsqu'un rayon 142 est en vis-à-vis du capteur ToF 230 au cours d'une impulsion du capteur ToF 230. À titre d'exemple, le niveau du signal P est mémorisé par le dispositif 210 entre deux impulsions successives du capteur ToF 230.

Dans l'exemple représenté, un passage d'un rayon 142 en vis-à-vis du capteur ToF 230 est détecté (détections 310) à chaque basculement du signal P du niveau N au niveau Y. Dans un autre exemple, un passage du rayon 142 est détecté à chaque basculement du signal P du niveau Y au niveau N. La vitesse de rotation de la roue 140 est calculée à partir de la fréquence des détections 310. Un mode de réalisation d'un calcul de la vitesse de rotation à partir des détections 310 est décrit ci-après en relation avec la figure 4.

Par rapport à un dispositif de mesure de vitesse par aimant et bobine, un avantage du dispositif 210 de mesure par temps de vol est que la détection des passages des rayons est quasiment insensible à la valeur du seuil TH, pourvu, dans l'exemple représenté, que le seuil TH soit situé entre les valeurs D1 et D2. Le seuil TH est donc beaucoup plus facile à définir qu'un seuil pour détecter un passage sur la base d'une tension induite par le passage d'un aimant devant une bobine. Le dispositif 210 est donc plus fiable et plus facile à régler.

On a décrit ci-dessus, en relation avec la figure 3, un exemple particulier de procédé de détection par temps de vol des passages d'éléments tels que les rayons 142 de la roue 140. Les modes de réalisation ne se limitent pas à cet exemple particulier, et peuvent mettre en œuvre tout procédé de détection par temps de vol de la présence et/ou de l'absence d'un élément donné en vis-à-vis d'un capteur ToF.

La figure 4 représente, de manière schématique et sous forme de blocs, un exemple d'un mode de réalisation du dispositif 210 du véhicule monoplace 200 de la figure 2.

Le dispositif 210 comprend, outre le capteur ToF 230 décrit ci-dessus, une unité de traitement séquentiel de données 410 (PU), telle qu'un microprocesseur. L'unité de traitement 410 peut comprendre une mémoire et/ou être reliée, ou connectée, à une mémoire du dispositif 210. La mémoire comprend un programme dont l'exécution par l'unité de traitement 410 provoque le calcul d'une valeur représentative SPD/RPM de la vitesse de rotation mesurée SPD et/ou de la vitesse de déplacement du véhicule monoplace 200. De préférence, l'unité de traitement 410 et le capteur ToF 230 sont situés sur un même circuit imprimé PCB. L'unité de traitement 410 et le capteur ToF peuvent aussi être dans un même boîtier de circuit imprimé.

De préférence, le dispositif 210 comprend en outre une pile 420 de type premier entré premier sorti ou FIFO (en anglais "First In First Out"). La pile FIFO 420 a des emplacements 422 situés par exemple dans l'unité de traitement 410, dans la mémoire ou dans une autre mémoire du dispositif 210. Cette autre mémoire est alors préférentiellement située sur le même circuit imprimé que l'unité de traitement 410 et le capteur ToF 230, par exemple dans le même boîtier.

La pile FIFO 410 comprend un nombre donné N0 d'emplacements. Dans l'exemple représenté, la pile FIFO 420 comprend cinq emplacements.

En fonctionnement, à chaque détection 310, on stocke, dans la pile FIFO 420, la durée de l'intervalle de temps séparant cette détection 310 de la détection 310 précédente. Une fois que la pile FIFO 420 est remplie, la pile contient, à chaque détection 310, les durées des N0 intervalles de temps entre les N0+1 détections 310 successives constituées par la détection 310 considérée et les N0 détections 310 précédentes.

La valeur SPD/RPM fournie par le dispositif 210 est alors une valeur représentative d'un rapport entre le nombre donné N0 et la somme des N0 durées d'intervalles de temps stockées dans la pile FIFO 420.

Dans une variante, la valeur SPD/RPM fournie par le dispositif 210 est calculée en fonction d'un seul intervalle de temps, c'est-à-dire à partir de seulement deux détections 310 successives. Par rapport à cette variante, la valeur SPD/RPM, calculée à partir de plusieurs durées d'intervalles de temps, est plus proche d'une valeur représentative de la vitesse de rotation réelle, autrement dit, la mesure de vitesse de rotation et/ou de vitesse de déplacement du véhicule monoplace 200 est plus précise.

De préférence, le nombre donné N0 est strictement compris entre trois et dix fois le nombre des rayons 142 de la roue 140. Par rapport à des variantes dans lesquelles le nombre donné est supérieur à dix, on améliore le temps de réponse du capteur. Par rapport à des variantes dans lesquelles le nombre donné est inférieur à deux, on améliore la précision de la mesure. Le nombre donné N0 optimise donc le compromis entre le temps de réponse du dispositif 210 et la précision de la vitesse mesurée de rotation de la roue 140 et/ou de déplacement du véhicule monoplace 200.

L'exemple de dispositif 210 décrit ci-dessus en relation avec la figure 4 n'est pas limitatif. Ainsi, dans d'autres exemples, le dispositif 210 fournit, au lieu de la valeur SPD/RPM, un signal véhiculant une information de détection des passages des rayons en vis-à-vis du capteur, par exemple sous forme d'une impulsion à chaque détection 310. Ce signal peut être fourni à un dispositif tel que l'unité 226 (figure 2). De préférence, l'unité 226 met en œuvre le calcul de la vitesse de rotation de la roue 140 et/ou de déplacement du véhicule monoplace 200 d'une manière similaire à celle décrite ci-dessus en relation avec la figure 4.

Le calcul de la valeur SPD/RPM représentative de la vitesse de rotation mesurée, décrit ci-dessus en relation avec la figure 4, n'est, lui non plus, pas limitatif. Ainsi, les modes de réalisation sont compatibles avec tout procédé de calcul de vitesse de rotation de la roue 140 et/ou de déplacement du véhicule monoplace 200, à partir des détections 310. De préférence, ce calcul est effectué à partir de plusieurs durées d'intervalles de temps. À titre d'exemple, le calcul peut être de tout type de moyenne glissante entre des valeurs de vitesse de rotation calculées pendant lesdits intervalles de temps.

Selon un avantage de la fréquence des mesures ToF, telle que mentionnée ci-dessus, la fréquence des mesures ToF est suffisamment rapide pour que chaque passage soit détecté. Dans des variantes, la fréquence des mesures ToF est inférieure à une limite en deçà de laquelle certains des passages ne sont pas détectés. Cependant, par rapport à de telles variantes, les fréquences suffisamment rapides mentionnées ci-dessus permettent de simplifier le calcul de la vitesse de rotation.

Les modes de réalisation et leurs variantes ne se limitent pas aux exemples décrits ci-dessus en relation avec les figures 2 à 4.

Ainsi, dans les modes de réalisation décrits ci-dessus, le capteur ToF est solidaire d'un bras d'une fourche. Cependant, pour mesurer la vitesse de rotation d'une roue, le capteur peut être fixé à tout bras comprenant un palier ou un axe de rotation de la roue. Par bras, on entend tout élément comprenant une partie s'étendant radialement à partir de l'axe de la roue, en sorte que les rayons passent en vis-à-vis du capteur. Plus généralement, le capteur ToF peut être situé sur tout élément fixe d'un véhicule monoplace permettant que les rayons passent en vis-à-vis du capteur.

Dans les modes de réalisation décrits ci-dessus, le dispositif 210 détecte le passage de plusieurs rayons 142 de la roue 140. Dans d'autres modes de réalisation, la roue comprend une cible fixée à un ou plusieurs rayons de la roue ou plusieurs cibles fixées à des rayons de la roue. On détecte le passage de la ou des cibles par une position située en vis-à-vis d'un capteur ToF. Le capteur ToF est alors positionné pour que la ou les cibles passent dans le cône d'émission du capteur ToF lors de la rotation de la roue. Dans encore d'autres modes de réalisation, la roue est dépourvue de rayons, par exemple la roue est pleine, et la roue comporte alors une ou plusieurs cibles.

Dans les modes de réalisation décrits ci-dessus, le capteur ToF 230 est solidaire d'un élément fixe et orienté vers une position par laquelle passent un ou plusieurs éléments de la roue 140. Dans d'autres modes de réalisation, on mesure la vitesse de rotation en utilisant un capteur ToF solidaire de la roue et positionné de façon à être orienté, à chaque passage de la roue par une position donnée, vers un élément fixe par rapport à la position donnée. Ainsi, dans une variante de l'exemple de la figure 2, le capteur ToF 230 est fixé sur un des rayons 142 de la roue 140, et l'élément fixe est une partie du bras 240. L'élément fixe peut aussi être une cible solidaire du bras 240. Selon un avantage, on réduit ainsi le nombre de passages à chaque tour, ce qui permet d'augmenter la vitesse de rotation mesurable pour une même fréquence de mesures ToF donnée, et/ou de réduire la fréquence de mesures ToF pour une même vitesse de rotation maximum mesurable.

Les modes de réalisation sont décrits ci-dessus dans l'exemple où le véhicule monoplace 200 est une trottinette. Cependant, les modes de réalisation sont également applicables à tout véhicule monoplace, en particulier tel que défini ci-dessus en relation avec la figure 1. Ainsi, on peut prévoir une trottinette, une trottinette électrique, un vélo, un tricycle, un vélo électrique, une gyroroue ou un gyropode, comprenant un dispositif de mesure de vitesse de rotation d'une roue et/ou de déplacement du véhicule monoplace, la mesure de vitesse comprenant des détections par temps de vol de passages d'un ou plusieurs éléments de la roue, tels que des rayons ou des cibles, par une position donnée. Une roue comprenant une ou des cibles est préférée dans le cas d'une absence de rayons (roue pleine) ou de rayons relativement fins, tels que ceux d'un vélo, et l'absence de cible est préférée dans le cas de rayons relativement épais.

De plus, le procédé de mesure de vitesse de rotation d'une roue décrit ci-dessus, comprenant des détections par temps de vol de passage d'un ou plusieurs éléments de la roue par une position donnée, peut être appliqué à d'autres véhicules que les véhicules monoplaces. Plus généralement, la roue des modes de réalisation décrits ci-dessus peut être remplacée par la plupart des objets susceptibles d'être en rotation. Le capteur ToF peut alors être solidaire d'un élément fixe et orienté vers une position par laquelle passent un ou des éléments de cet objet, lorsque celui-ci est en rotation. Le capteur ToF peut aussi être solidaire de cet objet et positionné de manière à être orienté vers un élément fixe à chaque passage de l'objet par une position donnée.

En particulier, l'objet en rotation peut être une roue d'un appareil d'entraînement sportif, tel qu'un vélo d'intérieur. L'appareil est alors, de préférence, équipé d'un afficheur ou est relié, par une liaison filaire ou sans fil, à un afficheur. En fonctionnement, l'afficheur fournit à un utilisateur de l'appareil une indication sous forme de vitesse, représentative d'un effort physique fourni par l'utilisateur.

### Deuxième aspect qui n'est pas revendiqué

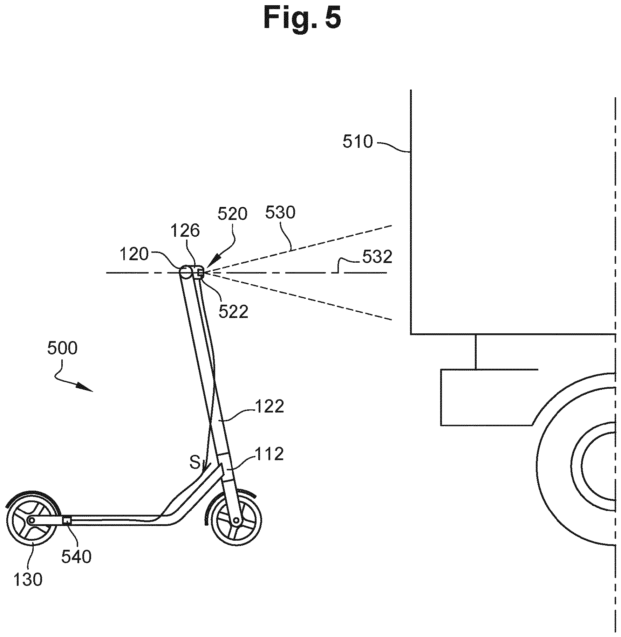

La figure 5 représente, de manière schématique, un mode de réalisation d'un véhicule monoplace 500, selon le deuxième aspect, et un obstacle 510, par exemple un camion.

L'obstacle 510 peut être tout élément ou objet, tel qu'un autre véhicule, ou tout être vivant, par exemple animal ou humain, susceptible d'entrer en collision avec le véhicule monoplace 500 et/ou son utilisateur, et de provoquer un accident.

Dans l'exemple représenté, le véhicule monoplace 500 comprend des éléments identiques ou similaires à ceux de la trottinette 100 de la figure 1. Ces éléments ne sont pas décrits à nouveau en détails. Seules les différences entre le véhicule monoplace 500 et la trottinette 100 sont mises ici en exergue.

Le véhicule monoplace 500 comprend un dispositif de protection 520 contre les collisions, ou dispositif anticollision 520. De préférence, le dispositif anticollision 520 est situé à l'avant du véhicule monoplace 500. Dans l'exemple représenté, le dispositif anticollision 520 est fixé au guidon 120 ou à l'afficheur 126. Le dispositif anticollision 520 peut également, dans d'autres exemples, être accroché à la tige 122.

Le dispositif anticollision 520 comprend un capteur ToF 522, tel que défini ci-dessus en relation avec la figure 2, à savoir un dispositif configuré pour fournir, par mesure de temps de vol d'impulsions optiques, une information concernant la présence d'un objet extérieur au capteur ToF et/ou une information représentative d'une distance entre le capteur ToF et cet objet extérieur.

De préférence, les impulsions optiques du capteur ToF 522 ont des longueurs d'onde toutes, ou sensiblement toutes, situées dans le proche infrarouge, c'est-à-dire des longueurs d'onde comprises entre 700 nm et 1500 nm, de préférence comprises entre 940 nm et 1500 nm, plus préférentiellement égales à 940 nm ou à environ 940 nm

De préférence, les mesures ToF effectuées par le capteur ToF 522 sont répétées régulièrement, chaque mesure ToF pouvant correspondre à plusieurs impulsions. La fréquence des mesures ToF est alors préférentiellement comprise entre 1 Hz et 100 Hz, par exemple égale à 30 Hz ou à environ 30 Hz. La fréquence des mesures ToF peut aussi être supérieure à 100 Hz, cependant, en comparaison, le choix d'une fréquence de mesure ToF inférieure à 100 Hz permet d'améliorer la précision de la mesure.

En fonctionnement, les impulsions optiques du capteur ToF 522 sont émises, typiquement, dans un cône d'émission 530 ayant un axe 532. Plus précisément, le cône d'émission 530 est délimité par une frontière définie, dans chaque plan orthogonal à l'axe 532, par les points où l'intensité des impulsions est égale à un pourcentage donné d'une intensité maximale des impulsions par unité de surface de ce plan, en l'absence d'obstacle situé sur le chemin des impulsions. Le pourcentage donné est de préférence inférieur ou égal à 10 %, par exemple égal à 5 %.

Le capteur ToF 522 est préférentiellement orienté vers l'avant du véhicule monoplace 500, c'est-à-dire que l'axe 532 est sensiblement, à 30 degrés près, de préférence à 15 degrés près, parallèle à la direction de déplacement, ou direction longitudinale, du véhicule monoplace 500. Lorsqu'un ou plusieurs obstacles sont situés sur le trajet du véhicule monoplace 500, ce ou ces obstacles sont alors situés en vis-à-vis du capteur ToF 522, c'est-à-dire dans le cône d'émission 530. Ainsi, le capteur ToF détecte la présence du ou des obstacles 510 situés sur le trajet du véhicule monoplace 500. Le capteur ToF 522 fournit une information représentative de la distance entre le capteur et l'obstacle si cet obstacle est seul en vis-à-vis du capteur, ou entre le capteur et l'obstacle le plus proche du capteur s'il y a plusieurs obstacles en vis-à-vis du capteur.

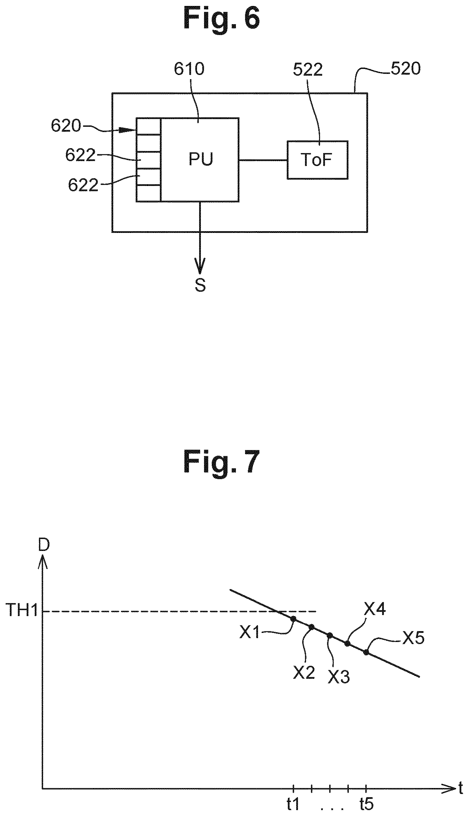

En fonctionnement, lorsqu'un obstacle est situé dans le cône d'émission 530, le dispositif anticollision 520 détermine, à partir des informations fournies par le capteur ToF 522, une valeur mesurée de vitesse relative entre le véhicule monoplace 500 et l'obstacle. Un exemple de calcul de la vitesse mesurée est décrit ci-après en relation avec la figure 7. Le dispositif anticollision 520 prend, en fonction de la valeur mesurée de vitesse relative, une contre-mesure destinée à éviter une collision.

De préférence, lorsque la valeur mesurée de vitesse relative entre le véhicule monoplace 500 et l'obstacle 510 est supérieure à un seuil, le dispositif anticollision 520 fournit un signal de freinage S du véhicule monoplace 500. Pour cela, plus préférentiellement, le véhicule monoplace 500 est un véhicule électrique doté d'un dispositif de freinage 540, par exemple un dispositif de freinage de la roue arrière 130 du véhicule monoplace 500. Le dispositif de freinage 540 reçoit le signal S et stoppe ou ralentit le véhicule monoplace 500. Le freinage permet d'éviter d'entrer en collision avec l'obstacle.

Dans des variantes, le dispositif anticollision 520 analyse l'évolution de la vitesse relative, et agit sur la vitesse du véhicule monoplace pour éviter une collision, par exemple de sorte à réduire la vitesse relative. Par rapport à de telles variantes, le fait de déclencher un freinage lorsque la vitesse relative dépasse un seuil est beaucoup plus simple à mettre en œuvre.

De préférence, le seuil de vitesse est inférieur ou égal à 20 km/h, plus préférentiellement compris entre 8 km/h et 15 km/h. Ces seuils de vitesses sont particulièrement adaptés à protéger les véhicules monoplaces contre les collisions.

Un avantage du dispositif anticollision 520 est qu'il permet un freinage plus précoce que si, en l'absence de ce dispositif, l'utilisateur devait déclencher lui-même le freinage. On évite un retard lié au temps de réaction de l'utilisateur.

On aurait pu penser déclencher un freinage lorsqu'un obstacle est détecté et que la vitesse de déplacement du véhicule est supérieure à un seuil. En comparaison avec un tel déclenchement en fonction de la vitesse de déplacement du véhicule monoplace 500 (vitesse absolue), le déclenchement en fonction de la vitesse relative entre le véhicule monoplace 500 et l'obstacle 510 permet à l'utilisateur du véhicule monoplace 500 de suivre l'obstacle 510 lorsque celui-ci se déplace à une vitesse sensiblement égale à la vitesse de déplacement du véhicule monoplace 500, sans que le freinage soit déclenché.

De préférence, le procédé est mis en œuvre seulement pour un ou des obstacles situés au moins en partie à des distances, inférieures à un premier seuil, de la source des impulsions optiques du capteur ToF 522. Pour cela, par exemple, le dispositif anticollision 520 détermine la vitesse mesurée seulement pour ces obstacles, et plus préférentiellement, seuls ses obstacles sont détectés par le capteur ToF 522. De préférence, le premier seuil est inférieur à 4 mètres ou à environ 4 mètres. On évite ainsi de provoquer un freinage pour un obstacle que l'utilisateur du véhicule monoplace 500 a le temps d'éviter ou l'intention de contourner.

De préférence, le procédé de protection contre les collisions est mis en œuvre pour tout obstacle seul, au moins en partie situé à n'importe quelle position dans le cône d'émission 530 et à n'importe quelle distance, inférieure à un deuxième seuil, de la source des impulsions optiques du capteur ToF 522. Lorsque plusieurs obstacles sont au moins en partie présents dans le cône d'émission 530 à des distances de la source d'impulsions inférieures au deuxième seuil, le procédé de protection est mis en œuvre pour l'obstacle le plus proche. Le deuxième seuil est inférieur au premier seuil. De préférence, le deuxième seuil est supérieur à 2 mètres ou à environ 2 mètres.

De préférence, le cône d'émission 530 a un demi-angle au sommet élevé, c'est-à-dire supérieur à 10 degrés, plus préférentiellement supérieur à 20 degrés, par exemple égal à 27 degrés ou à environ 27 degrés. Le demi-angle au sommet du cône d'émission 530 est défini similairement à l'angle au sommet du cône d'émission 260 (figure 2) défini en relation avec la figure 2. De préférence, la source des impulsions du capteur ToF 522 est ponctuelle ou sensiblement ponctuelle à l'échelle des dimensions du véhicule monoplace 500 et/ou le cône d'émission 530 est de révolution autour de l'axe 532.

Par rapport à des variantes dans lesquelles le demi-angle au sommet du cône d'émission 530 n'a pas les valeurs élevées définies ci-dessus, les valeurs élevées du demi-angle au sommet permettent d'éviter des risques de collisions avec des obstacles plus éloignés de l'axe 532. En particulier, ceci permet d'éviter des risques de collision avec un obstacle mobile se déplaçant transversalement par rapport à la direction longitudinale du déplacement du véhicule monoplace 500. Un exemple d'un tel obstacle est un piéton croisant la trajectoire du véhicule monoplace 500.

Selon un mode de réalisation, le capteur ToF 522 est compris dans, ou constitue, un boîtier de circuit intégré. À titre d'exemple, le capteur ToF 522 est de type commercialisé sous la référence ST VL53L1X. À titre d'exemple, le boîtier est suffisamment petit pour s'inscrire dans un parallélépipède ayant des dimensions de côtés égales à 5 mm, 3 mm et 2 mm, par exemple égales à respectivement 4,5 mm, 2,5 mm et 1,56 mm.

Un tel capteur ToF inclus dans un boîtier de circuit intégré permet d'obtenir facilement les valeurs élevées, définies ci-dessus, d'angle au sommet du cône d'émission 530, et permet facilement d'obtenir les premier et deuxième seuils de distance définis ci-dessus. En outre, avantageusement, un capteur ToF inclus dans un boîtier de circuit intégré est particulièrement léger et aisé à mettre en œuvre dans un véhicule monoplace.

La figure 6 représente, de manière schématique et sous forme de blocs, un exemple d'un mode de réalisation du dispositif anticollision 520 du véhicule monoplace 500 de la figure 5.

Le dispositif anticollision 520 comprend, outre le capteur ToF 522 décrit ci-dessus, une unité de traitement séquentiel de données 610 (PU), telle qu'un microprocesseur. L'unité de traitement 610 peut comprendre une mémoire et/ou être reliée, ou connectée, à une mémoire du dispositif anticollision 520. La mémoire comprend un programme dont l'exécution par l'unité de traitement 610 provoque l'émission du signal S de freinage en fonction de la vitesse relative entre le véhicule monoplace 500 et un obstacle. De préférence, l'unité de traitement 610 et le capteur ToF 522 sont situés sur un même circuit imprimé PCB. L'unité de traitement 610 et le capteur ToF 522 peuvent aussi être dans un même boîtier de circuit imprimé.

De préférence, le dispositif anticollision 520 comprend en outre une pile 620 de type premier entré premier sorti ou FIFO (en anglais "First In First Out"). La pile FIFO 620 a des emplacements 622 situés par exemple dans l'unité de traitement 610, dans la mémoire ou dans une autre mémoire du dispositif anticollision 520. Cette autre mémoire est alors préférentiellement située sur le même circuit imprimé que l'unité de traitement 610 et le capteur ToF 522, par exemple dans le même boîtier.

La pile FIFO 620 comprend un nombre donné N0 d'emplacements. Dans l'exemple représenté, la pile FIFO 620 comprend cinq emplacements.

En fonctionnement, pour chaque impulsion du capteur ToF 522, on stocke dans la pile FIFO 620 une valeur de distance mesurée par le capteur ToF 522 entre le capteur ToF 522 et l'obstacle. Lorsque la pile FIFO 620 est pleine, elle contient les valeurs de distance mesurées à plusieurs instants.

La figure 7 représente une allure d'une distance en fonction du temps entre le véhicule monoplace 500 et un obstacle, dans un exemple de calcul de vitesse relative mesurée entre le véhicule monoplace 500 et un obstacle. De préférence, ce calcul est mis en œuvre par l'unité de traitement 610 de l'exemple de dispositif anticollision 520 de la figure 6.

Dans cet exemple de calcul, les valeurs mesurées (X1, X2, X3, X4, X5) de distance entre le véhicule monoplace 500 et l'obstacle à plusieurs instants ti (t1 ... t5) sont mémorisées, par exemple dans la pile FIFO 620. De préférence, les instants ti correspondent à des impulsions successives du capteur ToF 522. De préférence, la mémorisation est effectuée seulement lorsque la distance entre le véhicule monoplace 500 et l'obstacle est inférieure au premier seuil de distance TH1. La valeur mesurée de vitesse relative est obtenue par régression linéaire de ces valeurs mesurées, en fonction du temps.

Un avantage d'un calcul par régression linéaire est qu'il est particulièrement simple à mettre en œuvre. Cependant, les modes de réalisation décrits ne se limitent pas à cet exemple, et on peut mettre en œuvre tout calcul permettant de déterminer la vitesse relative entre un véhicule et un objet à partir de valeurs mesurées de distance entre le véhicule et l'objet à plusieurs instants.

Les modes de réalisation du deuxième aspect sont décrits ci-dessus dans l'exemple où le véhicule monoplace est une trottinette. Cependant, les modes de réalisation du deuxième aspect sont également applicables à tout véhicule monoplace, en particulier tels que définis ci-dessus en relation avec la figure 1. Ainsi, on peut prévoir tout véhicule monoplace, tel qu'une trottinette, une trottinette électrique, un vélo, un tricycle, un vélo électrique, une gyroroue ou, par exemple, un gyropode, comprenant un dispositif anticollision mesurant par temps de vol une vitesse relative entre le véhicule monoplace et un obstacle.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les véhicules monoplace comprenant un dispositif selon le premier aspect, à savoir configuré pour mesurer par temps de vol une vitesse de rotation d'une roue du véhicule et/ou une vitesse du véhicule, peuvent comprendre en outre un dispositif anticollision selon le deuxième aspect, à savoir mesurant par temps de vol une vitesse relative entre le véhicule monoplace et un obstacle.

Enfin, la mise en œuvre pratique des modes de réalisation et variantes décrits est à la portée de la personne du métier à partir des indications fonctionnelles données ci-dessus.

## Revendications

1. Procédé de mesure de vitesse de rotation d'une roue (140) en rotation par rapport à des premier et deuxième bras (240, 245) d'une fourche (114, 124), les premier et deuxième bras (240, 245) étant disposés symétriquement par rapport à un plan médian de la roue orthogonal à un axe de la roue, comprenant des détections (310) par temps de vol, par un capteur par temps de vol (230) solidaire d'une partie du premier bras (240), de passages d'un ou plusieurs éléments (142) de la roue par une position donnée (270), ledit un ou plusieurs éléments comprenant un ou plusieurs rayons (142) de la roue, chaque détection (310) par temps de vol comprenant :
- émettre, par le capteur par temps de vol, des impulsions optiques ;
- générer, par le capteur par temps de vol, une valeur de distance représentative de la distance mesurée par le capteur, la distance prenant une premier valeur (D1) égale à la distance entre le capteur (230) et le deuxième bras (245) lorsqu'aucun rayon n'est situé en vis-à-vis du capteur (230), et une deuxième valeur (D2) inférieur à la première valeur lorsqu'un rayon passe en vis-à-vis du capteur (230) ;
- comparer la valeur de distance avec un seuil de distance (TH) afin de détecter les passages dudit un ou plusieurs éléments (142), la comparaison résultant en un signal (P) prenant un premier niveau (N) lorsqu'une des impulsions optiques se produit en l'absence d'élément (142) en vis-à-vis du capteur par temps de vol (230) et un deuxième niveau (Y) lorsqu'un élément (142) est en vis-à-vis du capteur par temps de vol (230) au cours d'une des impulsions optiques, un passage de l'élément (142) étant détecté à chaque basculement du signal (P) du premier niveau (N) au deuxième niveau (Y) ou à chaque basculement du signal (P) du deuxième niveau (Y) au premier niveau (N) ; et
- calculer la vitesse de rotation de la roue (140) à partir desdites détections du passage de l'élément (142).

2. Système comprenant une roue (140), une fourche (114, 124) comprenant des premier et deuxième bras (240, 245) disposés symétriquement par rapport à un plan médian de la roue orthogonal à un axe de la roue (140), la roue étant en rotation par rapport aux premier et deuxième bras (240, 245), et un dispositif de mesure de vitesse de rotation de la roue (140), le dispositif étant configuré pour mettre en œuvre des détections (310) par temps de vol, par un capteur par temps de vol (230) solidaire d'une partie du premier bras (240), de passages d'un ou plusieurs éléments (142) de la roue par une position donnée, ledit un ou plusieurs éléments comprenant un ou plusieurs rayons (142) de la roue, chaque détection (310) par temps de vol comprenant :
- émettre, par le capteur par temps de vol, des impulsions optiques ;
- générer, par le capteur par temps de vol, une valeur de distance représentative de la distance mesurée par le capteur, la distance prenant une premier valeur (D1) égale à la distance entre le capteur (230) et le deuxième bras (245) lorsqu'aucun rayon n'est situé en vis-à-vis du capteur (230), et une deuxième valeur (D2) inférieur à la première valeur lorsqu'un rayon passe en vis-à-vis du capteur (230) ;
- comparer la valeur de distance avec un seuil de distance (TH) afin de détecter les passages dudit un ou plusieurs éléments (142), la comparaison résultant en un signal (P) prenant un premier niveau (N) lorsqu'une des impulsions optiques se produit en l'absence d'élément (142) en vis-à-vis du capteur par temps de vol (230) et un deuxième niveau (Y) lorsqu'un élément (142) est en vis-à-vis du capteur par temps de vol (230) au cours d'une des impulsions optiques, un passage de l'élément (142) étant détecté à chaque basculement du signal (P) du premier niveau (N) au deuxième niveau (Y) ou du deuxième niveau (Y) au premier niveau (N) ; et
- calculer la vitesse de rotation de la roue (140) à partir desdites détections du passage de l'élément (142).

3. Procédé selon la revendication 1 ou système selon la revendication 2, dans lequel :
- la roue est une de véhicule monoplace ou d'appareil d'entraînement sportif et une vitesse du véhicule monoplace ou de l'appareil est fournie à partir de la vitesse de rotation mesurée.

4. Procédé selon la revendication 1 ou 3, ou système selon la revendication 2 ou 3, dans lequel une valeur représentative (SPD/RPM) de la vitesse de rotation mesurée est calculée en utilisant un nombre donné (N0), supérieur ou égal à deux, d'intervalles de temps entre lesdites détections (310), le nombre donné étant, de préférence, strictement compris entre trois et dix fois un nombre dudit un ou plusieurs éléments (142).

5. Système selon l'une quelconque des revendications 2 à 4, dans lequel le capteur par temps de vol (230) est compris dans un boîtier de circuit intégré.

6. Véhicule monoplace (200) ou appareil d'entraînement sportif comprenant un système selon l'une quelconque des revendications 2 à 5.

7. Véhicule monoplace (200) ou appareil d'entraînement sportif selon la revendication 6, dans lequel le premier bras (240) comporte un palier ou un axe de rotation de la roue, ledit élément fixe étant une partie du premier bras ou étant fixé à une partie du premier bras.

## Patentansprüche

1. Verfahren zum Messen der Drehgeschwindigkeit eines rotierenden Rades (140) relativ zu ersten und zweiten Armen (240, 245) einer Gabel (114, 124), wobei die ersten und zweiten Arme (240, 245) symmetrisch relativ zu einer Mittelebene des Rades orthogonal zu einer Achse des Rades angeordnet sind, wobei das Verfahren Laufzeiterfassungen (310) aufweist, durch einen Laufzeitsensor (230), der mit einem Teil des ersten Arms (240) integriert ist, und zwar von Durchgängen von einem oder mehreren Elementen (142) des Rades durch eine bestimmte Position (270), wobei das eine oder die mehreren Elemente eine oder mehrere Speichen (142) des Rades aufweisen, wobei jede Laufzeiterfassung (310) Folgendes aufweist:
- Übertragen, durch den Laufzeitsensor, von optischen Impulsen;
- Erzeugen, durch den Laufzeitsensor, eines Abstandswertes, der repräsentativ für den durch den Sensor gemessenen Abstand ist, wobei der Abstand einen ersten Wert (D1) annimmt, der gleich dem Abstand zwischen dem Sensor (230) und dem zweiten Arm (245) ist, wenn sich keine Speiche vor dem Sensor (230) befindet, und einen zweiten Wert (D2), der kleiner als der erste Wert ist, wenn eine Speiche vor dem Sensor (230) vorbeiläuft;
- Vergleichen des Abstandswertes mit einem Abstandsschwellenwert (TH), um Durchgänge des einen oder der mehreren Elemente (142) zu erfassen, wobei der Vergleich zu einem Signal (P) führt, das einen ersten Pegel (N) annimmt, wenn einer der optischen Impulse in Abwesenheit eines Elements (142) vor dem Laufzeitsensor (230) auftritt, und einen zweiten Pegel (Y), wenn ein Element (142) vor dem Laufzeitsensor (230) während eines der optischen Impulse vorbeiläuft, wobei der Durchgang des Elements (142) jedes Mal erfasst wird, wenn das Signal (P) von dem ersten Pegel (N) zu dem zweiten Pegel (Y) wechselt, oder jedes Mal, wenn das Signal (P) von dem zweiten Pegel (Y) zu dem ersten Pegel (N) wechselt; und
- Berechnen der Drehgeschwindigkeit des Rades (140) aus den Erfassungen des Durchgangs des Elements (142).

2. System aufweisend ein Rad (140), eine Gabel (114, 124) mit ersten und zweiten Armen (240, 245), die symmetrisch relativ zu einer Mittelebene des Rades orthogonal zu einer Achse des Rades (140) angeordnet sind, wobei das Rad relativ zu den ersten und zweiten Armen (240, 245) rotiert, und eine Vorrichtung zum Messen der Drehgeschwindigkeit des Rades (140), wobei die Vorrichtung eingerichtet ist zum Implementieren von Laufzeiterfassungen (310,) durch einen Laufzeitsensor (230), der mit einem Abschnitt des ersten Arms (240) integriert ist, und zwar von Durchgängen von einem oder mehreren Elementen (142) des Rads durch eine bestimmte Position, wobei das eine oder die mehreren Elemente eine oder mehrere Speichen (142) des Rads aufweisen, wobei jede Laufzeiterfassung (310) Folgendes aufweist:
- Übertragen, durch den Laufzeitsensor, von optischen Impulsen;
- Erzeugen, durch den Laufzeitsensor, eines Abstandswertes, der repräsentativ für den durch den Sensor gemessenen Abstand ist, wobei der Abstand einen ersten Wert (D1) annimmt, der gleich dem Abstand zwischen dem Sensor (230) und dem zweiten Arm (245) ist, wenn sich keine Speiche vor dem Sensor (230) befindet, und einen zweiten Wert (D2), der kleiner als der erste Wert ist, wenn eine Speiche vor dem Sensor (230) vorbeiläuft;
- Vergleichen des Abstandswertes mit einem Abstandsschwellenwert (TH), um Durchgänge des einen oder der mehreren Elemente (142) zu erfassen, wobei der Vergleich zu einem Signal (P) führt, das einen ersten Pegel (N) annimmt, wenn einer der optischen Impulse in Abwesenheit eines Elements (142) vor dem Laufzeitsensor (230) auftritt, und einen zweiten Pegel (Y), wenn ein Element (142) vor dem Laufzeitsensor (230) während eines der optischen Impulse vorbeiläuft, wobei der Durchgang des Elements (142) jedes Mal erfasst wird, wenn das Signal (P) von dem ersten Pegel (N) zu dem zweiten Pegel (Y) wechselt, oder jedes Mal, wenn das Signal (P) von dem zweiten Pegel (Y) zu dem ersten Pegel (N) wechselt; und
- Berechnen der Drehgeschwindigkeit des Rades (140) aus den Erfassungen des Durchgangs des Elements (142).

3. Verfahren nach Anspruch 1 oder System nach Anspruch 2, wobei:
- das Rad ein einsitziges Fahrzeug oder ein Sporttrainingsgerät ist und eine Geschwindigkeit des einsitzigen Fahrzeugs oder des Trainingsgeräts aus der gemessenen Drehgeschwindigkeit ermittelt wird.

4. Verfahren nach Anspruch 1 oder 3 oder System nach Anspruch 2 oder 3, wobei ein repräsentativer Wert (SPD/RPM) der gemessenen Drehgeschwindigkeit unter Verwendung einer gegebenen Anzahl (N0) berechnet wird, die größer oder gleich zwei ist, und zwar von Zeitintervallen zwischen den Erfassungen (310), wobei die bestimmte Anzahl vorzugsweise genau zwischen dem Drei- und Zehnfachen einer Anzahl des einen oder mehrerer Elemente (142) liegt.

5. System nach einem der Ansprüche 2 bis 4, wobei der Laufzeitsensor (230) in einer integrierten Schaltung enthalten ist.

6. Einsitziges Fahrzeug (200) oder Sporttrainingsgerät mit dem System nach einem der Ansprüche 2 bis 5.

7. Einsitziges Fahrzeug (200) oder Sporttrainingsgerät nach Anspruch 6, bei dem der erste Arm (240) ein Lager oder eine Drehachse des Rades aufweist, wobei das feste Element ein Teil des ersten Arms ist oder an einem Teil des ersten Arms befestigt ist.

## Claims

1. A method of measuring the speed of rotation of a rotating wheel (140) relative to first and second arms (240, 245) of a fork (114, 124), the first and second arms (240, 245) being arranged symmetrically relative to a median plane of the wheel orthogonal to an axis of the wheel, the method comprising time-of-flight detections (310), by a time-of-flight sensor (230) integral with a part of the first arm (240), of passages of one or more elements (142) of the wheel through a given position (270), said one or more elements comprising one or more spokes (142) of the wheel, each time-of-flight detection (310) comprising:
- transmitting, by the time-of-flight sensor, optical pulses ;
- generating, by the time-of-flight sensor, a distance value representative of the distance measured by the sensor, the distance assuming a first value (D1) equal to the distance between the sensor (230) and the second arm (245) when no spoke is located in front of the sensor (230), and a second value (D2) less than the first value when a spoke passes in front of the sensor (230);
- comparing the distance value with a distance threshold (TH) in order to detect passages of said one or more elements (142), the comparison resulting in a signal (P) assuming a first level (N) when one of the optical pulses occurs in the absence of an element (142) in front of the time-of-flight sensor (230) and a second level (Y) when an element (142) passes in front of the time-of-flight sensor (230) during one of the optical pulses, passage of the element (142) being detected each time the signal (P) switches from the first level (N) to the second level (Y) or each time the signal (P) switches from the second level (Y) to the first level (N); and
- calculating the rotation speed of the wheel (140) from said detections of the passage of the element (142).

2. A system comprising a wheel (140), a fork (114, 124) comprising first and second arms (240, 245) arranged symmetrically with respect to a median plane of the wheel orthogonal to an axis of the wheel (140), the wheel rotating with respect to the first and second arms (240, 245), and a device for measuring the speed of rotation of the wheel (140), the device being configured to implement time-of-flight detections (310), by a time-of-flight sensor (230) integral with a portion of the first arm (240), of passages of one or more elements (142) of the wheel through a given position, said one or more elements comprising one or more spokes (142) of the wheel, each time-of-flight detection (310) comprising :
- transmitting, by the time-of-flight sensor, optical pulses;
- generating, by the time-of-flight sensor, a distance value representative of the distance measured by the sensor, the distance assuming a first value (D1) equal to the distance between the sensor (230) and the second arm (245) when no spoke is located in front of the sensor (230), and a second value (D2) less than the first value when a spoke passes in front of the sensor (230);
- comparing the distance value with a distance threshold (TH) in order to detect passages of said one or more elements (142), the comparison resulting in a signal (P) assuming a first level (N) when one of the optical pulses occurs in the absence of an element (142) passing in front of the time-of-flight sensor (230) and a second level (Y) when an element (142) passes in front of the time-of-flight sensor (230) during one of the optical pulses, passage of the element (142) being detected each time the signal (P) switches from the first level (N) to the second level (Y) or from the second level (Y) to the first level (N); and
- calculating the rotation speed of the wheel (140) from said detections of the passage of the element (142).

3. The method according to claim 1 or system according to claim 2, wherein:
- the wheel is one of a single-seater vehicle or sports training device, and a speed of the single-seater vehicle or training device is provided from the measured rotational speed.

4. The method according to claim 1 or 3, or the system according to claim 2 or 3, wherein a representative value (SPD/RPM) of the measured rotational speed is calculated using a given number (N0), greater than or equal to two, of time intervals between said detections (310), the given number preferably being strictly between three and ten times a number of said one or more elements (142).

5. The system according to any one of claims 2 to 4, wherein the time-of-flight sensor (230) is comprised in an integrated circuit package.

6. A single-seater vehicle (200) or sports training device comprising the system according to any one of claims 2 to 5.

7. A single-seater vehicle (200) or sports training device according to claim 6, in which the first arm (240) comprises a bearing or axis of rotation of the wheel, said fixed element being a part of the first arm or being fixed to a part of the first arm.
